(19) Europäisches Patentamt

European Patent Office

Office européen des brevets

(11) Veröffentlichungsnummer: **0 222 140 B1**

(12) **EUROPÄISCHE PATENTSCHRIFT**

(45) Veröffentlichungstag der Patentschrift: 27.02.91

(51) Int. Cl.⁵: **H02K 15/04**

(21) Anmeldenummer: **86113697.6**

(22) Anmeldetag: **03.10.86**

(54) **Verfahren und Vorrichtung zum Biegen einer Anzahl von nebeneinander und/oder übereinander liegenden, elektrisch isolierten stabförmigen Leitern.**

(30) Priorität: **15.10.85 DE 3536719**

(43) Veröffentlichungstag der Anmeldung:
**20.05.87 Patentblatt 87/21**

(45) Bekanntmachung des Hinweises auf die
Patenterteilung:
**27.02.91 Patentblatt 91/09**

(84) Benannte Vertragsstaaten:
**AT BE CH DE ES FR GB IT LI NL SE**

(56) Entgegenhaltungen:
**EP-A- 0 107 314**
**DE-A- 3 219 222**
**FR-A- 1 349 250**
**FR-A- 1 485 486**
**US-A- 1 437 887**

(73) Patentinhaber: **Siemens Aktiengesellschaft**
**Wittelsbacherplatz 2**
**D-8000 München 2(DE)**

(72) Erfinder: **Engelmann, Horst**
**Strassburger Strasse 11**
**D-8500 Nürnberg(DE)**
Erfinder: **Detterbeck, Max**
**Hochwaldstrasse 17**
**D-8500 Nürnberg(DE)**
Erfinder: **Iglberger, Holger, Dipl.-Ing.**
**Carlo-Schmid-Strasse 12**
**D-8510 Fürth(DE)**
Erfinder: **Berr, Günther**
**Wassermannstrasse 17**
**D-8500 Nürnberg(DE)**

## Beschreibung

Verfahren und Vorrichtung zum Biegen einer Anzahl von nebeneinander und/oder übereinander parallel liegenden, elektrisch isolierten stabförmigen Leitern

Die Erfindung bezieht sich auf ein Verfahren zum Biegen einer Anzahl von nebeneinander und/oder übereinander liegenden, elektrisch gegeneinander isolierten stabförmigen Leitern in Wellenund/oder Schleifenwicklungen für elektrische Maschinen, wobei die Leiter als U-förmiges Bündel mit jeweils parallelen Leitersträngen vorliegen, die in einzelnen Biegevorgängen um wenigstens zwei nichtparallele Raumachsen gebogen werden. Daneben bezieht sich die Erfindung auch auf die zugehörige Vorrichtung zur Durchführung dieses Verfahrens mit Mitteln zum Biegen von Stäben, durch welche das Bündel parallel laufender Leiterstränge der Form vorgegebener Schablonen angepaßt wird, wobei eine Halterungsvorrichtung für den U-förmig gebogenen Stabbereich und wobei wenigstens ein Anschlagteil als Begrenzung der Schablone für die Leiterstränge vorhanden ist.

Spulen für Rotoren und/oder Statoren von elektrischen Maschinen können aus mehreren elektrisch isolierten Kupfer-Einzelleitern mit rechteckförmigen Leiterquerschnitten bestehen, wobei beispielsweise beim gesamten Bündel jeweils zwei Leiter übereinander und bis zu fünf Teilleiter nebeneinander liegen. Derartige Bündel müssen bereits vor dem Einsetzen in die Rotoren oder Statoren in die entsprechende Raumform gebracht werden, wobei die Verbindungsteile zwischen den Nutteilen und den nasenförmigen Spulenansatzstücken bzw. den Anschlußenden in den einzelnen Leiterlagen, d.h. der sogenannte Wickelkopf, unterschiedlich stark gekrümmt werden. Bei einer in die Nuten eingelegten Spule werden anschließend die voneinander abstehenden Anschlußenden der Spulen zueinander ausgerichtet.

Das Biegen solcher Leiterbündel erfolgte bisher im allgemeinen in handwerklicher Fertigung. Dabei werden sogenannte Biegetrommeln eingesetzt, die als Schablonen für das Anpassen der Leiterstränge an die gewünschte Kontur dienen. Neben einer erheblichen Lärmbelastigung, die durch Hammerschläge auf die Blechschablone unvermeidbar bleibt, ist ein wesentlicher Nachteil dieser Fertigungsmethode, daß für jede Spulenänder eine neue Biegetrommel als Schablone anzufertigen ist.

Es sind auch bereits Einrichtungen vorgeschlagen worden, mit denen eine Fertigung von Spulen automatisiert durchgeführt werden soll. Aus der FR-A-1 349 250 ist ein Verfahren und die zugehörige Anordnung zum Biegen von Leiterstäben für die Statoren von elektrischen Maschinen bekannt, mit denen die Stäbe in einer Ebene gebogen bzw. verdrillt werden. In ähnlicher Weise werden bei der FR-A-1 485 486 mit einer pneumatischen oder hydraulischen Preßvorrichtung einseitig oder beidseitig eingespannte Leiterbündel in eine bestimmte Form gebracht, was aber diskontinuierlich erfolgt. Weiterhin werden in der US-A-1 437 887 und in der EP-A-0 107 314 entsprechende Ausführungsformen für solche Anordnungen beschrieben, mit den jeweils Spulenwindungen in einer Ebene geformt werden.

Aus der DE-AS 32 19 222 ist schließlich eine in Rotor- bzw. Statornuten einlegbare, etwa sechseckförmige und räumlich gekrümmte Spule und ein Verfahren mit zugehöriger Vorrichtung zu deren Herstellung bekannt. Hierbei werden die zu einem U-förmigen Leiterpaket ineinandergesteckten Einzelleiter in einem ersten Fertigungsschritt bei festgehaltenen deckungsgleichen Nasen und nach außen abgewinkelten Enden in der Oberund Unterschicht mit ihren schrägen Verbindungsteilen stufenweise zueinander abgebogen und anschließend in einem zweiten Fertigungsschritt die räumliche Krümmung der gesamten sechseckförmigen Spule vorgenommen.

Bei der bekannten Fertigung von räumlich gekrümmten Spulen müßten also wenigstens zwei völlig separate Arbeitsgänge durchlaufen werden und zwar

a) das Biegen der Spule in der Ebene und

b) das Runden der Spule in einer Formvorrichtung.

Insgesamt sind beim Stand der Technik jeweils einzelne Handhabungsvorgänge für das Biegen um unterschiedliche Raumrichtungen notwendig, wobei zur Lagerhaltung der Formvorrichtung zum Runden der Spule ein vergleichsweise hoher Platzbedarf notwendig ist.

Aufgabe der Erfindung ist es demgegenüber, ein vereinfachtes Verfahren und eine zugehörige Vorrichtung zum Biegen der oben angegebenen stabförmigen Leiter in Wellen- oder Schleifenwicklungen anzugeben.

Die Aufgabe ist erfindungsgemäß bei einem Verfahren der eingangs genannten Art dadurch gelöst, daß alle nebeneinanderund/oder übereinanderliegenden Leiter gleichzeitig komplett in Spulenform mit Krümmungen um wenigstens zwei senkrecht aufeinanderstehende Achsen gebogen werden, wobei die einzelnen Biegevorgänge an den Leitersträngen um die unterschiedlichern raumachsen im rahmen einer einzigen Handhabung des Bündels mit den zunächst paralleln Leitersträngen erfolgen. Vorzugsweise erfolgen die einzelnen Biegevorgänge vom U-förmigen Bereich des Bündels ausgehend an den Leitersträngen kontinuierlich fortlaufend zu deren freien Enden. Bei den beiden parallel laufenden Leitersträngen des Bündels können die Biegevoränge in unterschiedlicher Höhenposition erfolgen. Es ergibt sich damit eine Aufteilung in eine Oberstab und eine Unterstab-Lage der gesamten Spule. Im Rahmen der Erfindung wird dabei das Leiterbündel am U-förmigen Leiterbereich festgehalten und laufen die Leiterstränge bei den Biegevorgängen in Längsrichtung nach.

Bei der zugehörigen Vorrichtung ist für jeden Leiterstrang wenigstens ein unabhängig arbeitender Biegekopf mit begweli chem Biegefinger vorhan-den, wobei der Biegekopf aus einem verdrehbar gelagerten Biegebacken mit darin geführten Leiterstäben besteht, gegen den der bewegliche Biegefinger relativ verschiebbar ist. Vorzugsweise ist der Biegefinger linear in Achsrichtung verschiebbar und weist an seinem vorderen Ende abgerundete Ansatzstücke als Biegeschuhe auf.

Insgesamt sind bei einer vorteilhaften Ausgestaltung der erfindungsgemäßen Vorrichtung zweckmäßigerweise vier Biegeköpfe vorhanden, die um eine gemeinsame Achse, und zwar die Maschinenachse, schwenkbar angeordnet sind, von denen zwei im vorderen Bereich und zwei im hinteren Bereich in Querrichtung für das alternative Biegen von Schleifen oder Wellenwicklungen vorhanden sind. Für die Aktivierung der Biegeköpfe sind insbesondere hydraulische, aber gegebenenfalls auch pneumatische oder rein elektrische Mittel vorgesehen, welche programmgesteuert sein können.

Weitere Einzelheiten und Vorteile der Erfindung ergeben sich aus der nachfolgenden Beschreibung von Ausführungsbeispielen in Verbindung mit den Unteransprüchen. Es zeigen:

FIG 1    die Draufsicht auf eine aus mehreren Einzelleitern mit rechteckigem Quer-schnitt gebildete sechseckförmige Spu-le,

FIG 2    einen Schnitt nach der Linie II-II in FIG 1,

FIG 3    den Schnitt nach der Linie III-III für eine Schleifenwicklung oder eine Wellenwicklung,

FIG 4    ein Leiterbündel als Halbzeug für die Spulen in zwei zueinander senkrechten Ansichten,

FIG 5    die Draufsicht auf eine verwendete Biegevorrichtung in stark schematisierter Darstellung und

FIG 6    einen Teilausschnitt der verwendeten Vorrichtung in perspektivischer Darstellung zur Erläuterung eines elementaren Biegevorganges.

In den Figuren sind identische Teile mit gleichen Bezugszeichen versehen. Die Figuren werden teilweise zusammen beschrieben.

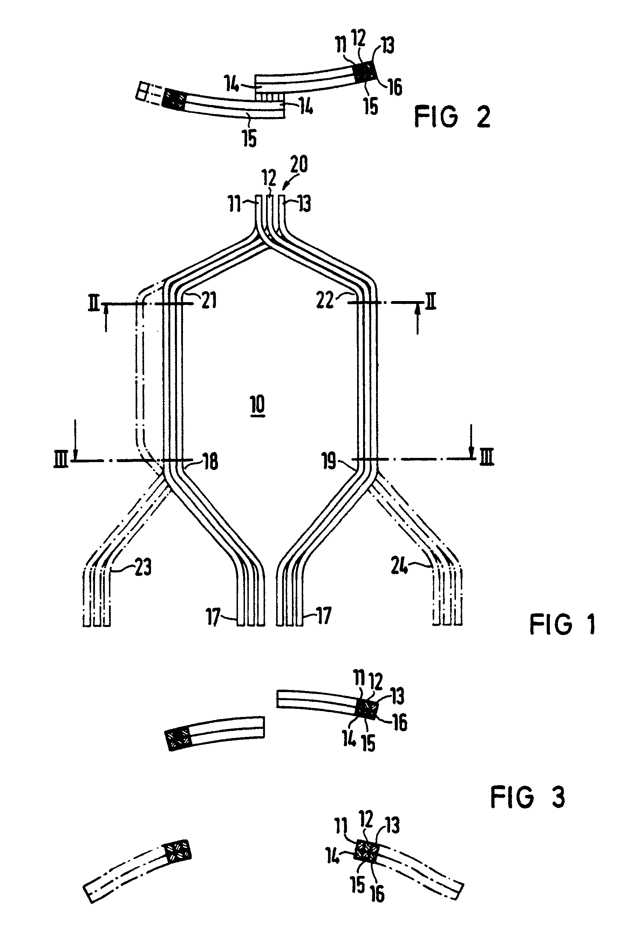

Gemäß FIG 1 bis 3 besteht eine sechseckförmige Spule für eine Schleifenwicklung oder alternativ eine Wellenwicklung eines genuteten Rotors oder Stators einer elektrischen Maschine aus biespielsweise fünf gebogenen Einzelleitern 11 bis 15 mit reckteckförmigen Querschnitt, die in Raumrichrung gekrümmt sind. Letzteres ist insbesondere aus FIG 2 und 3 erkennbar. Dabei können beispielsweise zwei Einzelleiter jeweils übereinander und bis zu fünf Einzelleiter nebeneinander liegen. In FIG 1 ist angedeutet, daß die nebeneinander liegenden Teilleiter seitlich getreppt auseinandergezogen sein können.

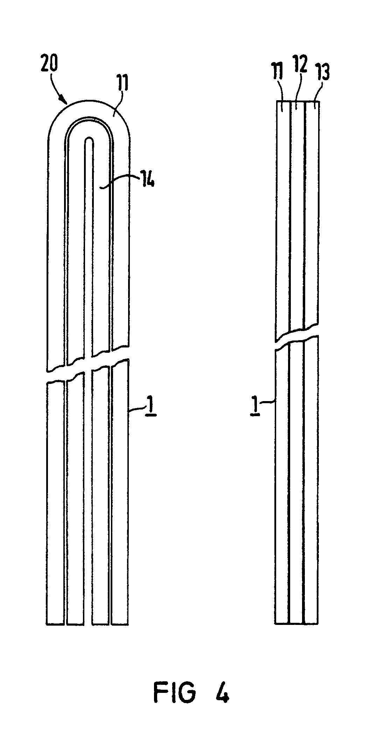

Das Halbzeug für derartige schleifenförmige oder wellenförmige Spulen ist überlicherweise ein haarnadelartiges Leiterbündel gemäß FIG 4 mit nebeneinander und übereinander parallel liegenden Einzelleitern, während die fertigen Spulenwicklungen in der Praxis als sogenannte Nasenstäbe bezeichnet werden. Die Nasen werden dabei durch den U-förmigen Übergang gebildet, was in FIG 1 mit 20 bezeichnet ist. In FIG 1 bilden die der Spulennase 20 gegenüberliegenden Anschlußenden der Einzelleiter 11 bis 16 den Spulenanschluß 17. Die Biegestellen der Spule sind mit 18, 19, 21, 22 sowie 23 und 24 bezeichnet.

Zur Fertigung der in FIG 1 bis 3 dargestellten Wellen- bzw. Schleifenwicklung aus Halbzeug gemäß FIG 4 muß eine relativ komplizierte Verformung durchgeführt werden, die für die Einzelleiter 11 bis 15 derart erfolgen soll, daß die fertige Spule 10 in die Nuten des Rotors oder Stators eingelegt werden kann und ein kompliziertes nachträgliches Ausrichten der die Spulenanschlüsse 17 bildenden Enden der Leiterstränge nicht mehr erforderlich ist. Dabei bilden die Nasen 20 der Einzelleiter 11 bis 15 den Fixpunkt für die Verformung.

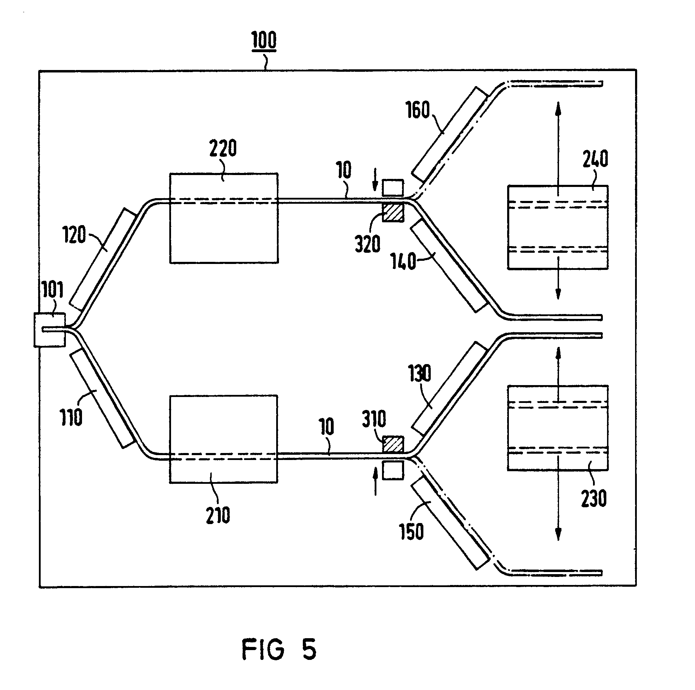

In der FIG 5 kennzeichnet Position IOO den Grundrahmen einer Verformungsvorrichtung. Diese trägt an ihrem vorderen Ende einen sogenannten Nasenhalter 101 zum Einspannen des Leiterbündels 1 als Halbzeug für die Spule 10. Mitt 110, 120, 130, 140, sowie 150 und 160 sind Anschlagteile bezeichnet, welche die Schablonen für den Verformweg der Leiterstäbe bilden. Die beiden vorderen Anschlagteile 110 und 120 sind für die Wicklung einer Schleifen- oder Wellenspule identisch, während von den hinteren Anschlagteilen für eine Schleifenspule die Anschlagteile I3O und I4O und für die Biegung einer Wellenspule die Anschlagteile 150 und 160 verwendet werden.

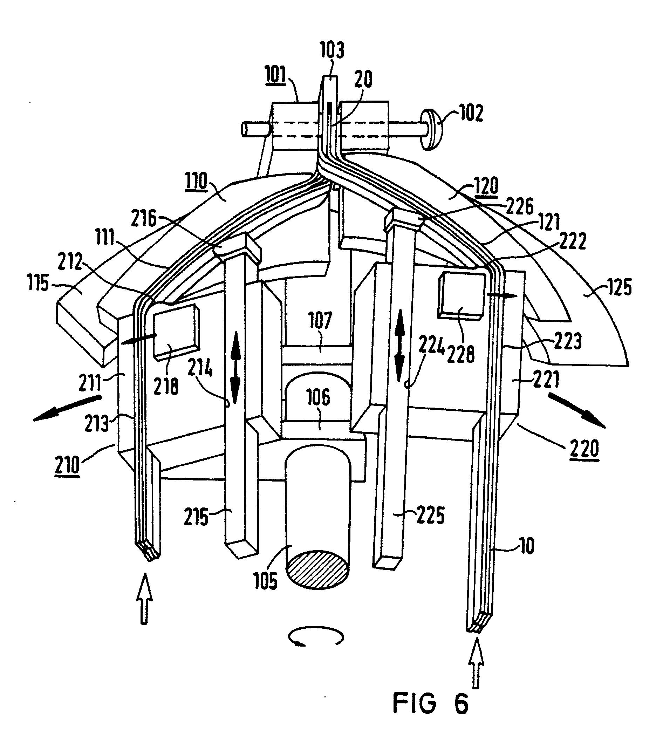

Den Anschlagteilen 110, 120 einerseits sowie den Anschlagteilen 130, 140 bzw. 150 und 160 andererseits sind jeweils sogenannte Biegeköpfe 210 und 220 bzw. 230 und 240 zugeordnet. Der Aufbau dieser Biegeköpfe wird weiter unten anhand FIG 6 noch im einzelnen beschrieben. Die Biegeköpfe sind radial beweglich und bewirken die eigentliche Verformung der Leiterstäbe gegenüber den Anschlagschablonen. In den Biegeköpfen sind die Leiterstränge geführt, und zwar derart, daß sie beim Verformen in Führungen gleiten können. Die hinteren Biegeköpfe sind in ihrer relativen Querlage austauschbar, je nach dem, ob eine Wellen- oder eine Schleifenwicklung hergestellt werden soll. Im hinteren Bereich der Leiterstränge, d.h. beim Übergrg vom Blechpaket- zum Stirnseitenbereich, können zusätzliche Feststellbacken 310 und 320 als Spannmittel für die Leiterstränge vorhanden sein, die bei der Biegung in diesem Bereich aktivierbar sind.

Die Biegeköpfe werden beispielsweise hydraulisch betätigt. Denkbar sind aber auch entsprechende pneumatische oder auch elektrische Mittel, mit denen insbesondere die genaue Reproduzierbarkeit der Biegevorgänge gewährleistet werden kann. Die dafür vorhandenen Steurmittel, wie beispielsweise berührungslose Schalter für die Erfassung der Position der Hydraulikzylinder oder aber induktive Weggebar o. dgl. für einen elektrischen Linearantrieb sind in der FIG 5 nicht im einzelnen ausgeführt.

Aus FIG 6 ist ersichtlich, daß am vorderen Teil der Biegevorrichtung gemäß FIG 5 der Nasenhalter 101 mit einem Bolzen 102 zur Festkegung des Leiterbündels angeordnet ist. Zur Auffächerung oder Treppung der Spulen werden kammartige Beilageteile 103 verwendet. Die Anschlagteile 110 und 120 haben eine konkave Form 111 und 121 und liegen auf gerundeten Formen 115 und 125 auf. Mit 105 ist die Maschinenachse bezeichnet, auf der Aufnahmewinkel 106 und 107 für die Biegeköpfe 210 und 220 angeordnet sind. Zur Einstellung auf unterschiedliche Rotor- bzw. Statordurchmesser sind die Biegeköpfe 210 und 220 höhenverstellbar. Deren Form und Funktion wird nachfolgend im einzelnen erläutert:

Die Biegeköpfe 210 und 220 bestehen jeweils aus einem Biegebacken 211 bzw. 221, die mit der Maschinenachse gekoppelt sind und dadurch zu einer gemeinsamen, aber gegenläufigen Schwenkbewegung aktivierbar sind. Es sind einerseits Aussparungen 213 bzw. 223 als Führungskanäle für das Durchgleiten der Leiterstränge und andererseits Führungen 214 bzw. 224 für zusätzliche Biegefinger 215 bzw. 225 vorhanden, die linear im Biegebacken 210 und 220 verschiebbar angeordnet sind. Die Biegefinger 215 und 225 haben an ihren den Anschlagteilen 110 und 210 zugewandten Enden sogenannte Biegeschuhe 216 bzw. 226, die in etwa halbrund ausgebildet sind und unter Druck auf den Leitern aufliegen, so daß sie deren Verformung in die gewünschte Kontur ermöglichen. Endseitig können an den Biegebacken 211 und 221 jeweils Höcker 212 und 222 angebracht sein, so daß ein gerundeter Übergang geschaffen ist, der die exakte Ausbildung der Radien am Wickelkopfübergang gewährleistet.

Anhand FIG 6 wird ein elementarer Biegevorgang im einzelnen verdeutlicht: das U-förmige Leiterbündel wird unter Berücksichtigung der Auffächerung des Nasen- und des Schaltseitenbereiches in die Biegemaschine 100 eingelegt. Dabei wird die Nase 20 des Leiterbündels durch den Bolzen 102 gegen Verrutschen gesichert und gespannt. Die Aussparungen 213 bzw. 223 der Biegebacken 210 bzw. 220 sind durch Schieber 218 bzw. 228 abdeckbar, um ein Ausweichen der Leiterstränge zu vermeiden.

Nach dem Start der Maschine werden die höhenverstellbaren Biegebacken 110 und 210 beispielsweise über Hydraulikzylinder um die Maschinenachse 105 geschwenkt. Dadurch wird das endseitig fixierte Leiterbündel mit den beiden freien Strängen in Längsrichtung durch die Biegebacken 110 und 120 gezogen. Die Leiterstränge suchen sich beim Verformungsvorgang den kürzesten Weg und werden daher auf der Formbacke 111 bzw. 121 der Anschlagteile 110 bzw. 120, die dem zu biegenden Radius entspricht, angedrückt. Zwischen dem eingespannten Nasenbereich und den Biegebacken 210 bzw. 220 würden sich selbst überlassene Leiterstränge eine S-förmige Auslenkung erfahren. Um dies zu vermeiden, sind der Schablone 115 bzw. 125 die Anschlagteile 110 und 120 als verstellbare Stirnseitenanschläge zugeordnet, gegen die die Leiterstränge durch die Biegefinger 215 bzw. 226 mit der Kontur der Biegeschuhe 216 bzw. 226 gedrückt werden. Damit werden die exakte Ausprägung der Radien vom Stirnseiten- zum Nasenbereich bzw. zum Blechpaketbereich erzielt.

Die Verformung erfolgt beim beschriebenen Biegevorgang gleichermaßen in den unterschiedlichen Höhenebenen, d.h. gleichzeitig für Ober- und Unterstäbe der Spule. Nachdem der Ober- und Unterstab des Nasenbereiches geformt worden ist, wird nach dem Spannen der Leiterstränge am Übergang vom Blechpaket- zum Schaltseitenbereich über die entsprechenden Biegeköpfe der FIG 5 der nächste Biegevorgang aktiviert. Die Gesamtbiegung erfolgt also durch die enzelnen Biegevorgänge vom Nasenbereich zum Schaltseitenbereich, womit insgesamt ein kontinuierlicher Asrbeitsablauf erreicht wird.

Die Steuerung zur Aktivierung der Biegeköpfe ist derart ausgelegt, daß sowohl Schleifen- als auch Wellenwicklungen gebogen werden können. Im Ergebnis müssen dazu lediglich die entsprechenden Biegebacken mit den Biegefingern, die Anschlagteile und die Spannstation ausgetauscht werden.

Es hat sich gezeigt, daß mit dem neuen Verfahren und der zugehörigen Vorrichtung nicht nur die Fertigungszeit der Spulen verringert werden kann, sondern daß auch eine exakte Reproduzierbarkeit der Form von Schleifen- bzw. Wellenwicklungen gesichert ist. Darüber hinaus wird nunmehr auch erreicht, daß die elektrische Isolation der einzelnen Teilleiter, die in einer Lackschicht auf den Kupferstäben besteht, durch die einzelnen Biegevorgänge nicht beschädigt wird.

## Ansprüche

1. Verfahren zum Biegen einer Anzahl von nebeneinander und/oder übereinander liegenden, elektrisch gegeneinander isolierten stabförmigen Leitern in Wellen- und/oder Schleifenwicklungen für elektrische Maschinen, wobei die Leiter als U-förmiges Bündel mit parallelen Leitersträngen vorliegen, die in einzelnen Biegevorgängen um wenigstens zwei nichtparallele Raumachsen gebogen werden, **dadurch gekennzeichnet,** daß alle nebeneinander- und/oder übereinanderliegenden Leiter gleichzeitig komplett in Spulenform mit Krümmungen um wenigstens zwei senkrecht aufeinanderstehende Achsen gebogen werden, wobei die einzelnen Biegevorgänge an den Leitersträngen um die unterschiedlichen Raumachsen im Rahmen einer einzigen Handhabung des Bündels mit dem zunächst parallelen Leitersträngen erfolgen.

2. Verfahren nach Anspruch 1, **dadurch gekennzeichnet,** daß die einzelnen Biegevorgänge vom U-förmigen Bereich des Bündels ausgehend an den Leitersträngen kontinuierlich fortlaufend zu deren freien Enden erfolgen.

3. Verfahren nach Anspruch 1, **dadurch gekennzeichnet,** daß die Biegevorgänge an den parallel laufenden Leitersträngen in unterschiedlicher Höhenposition durchgeführt werden.

4. Verfahren nach einem der Ansprüche 1 bis 3` **dadurch gekennzeichnet,** daß das Leiterbündel am U-förmigen Leiterbereich festgehalten wird und die Leiterstränge bei den Biegevorgängen in Längsrichtung nachlaufen.

5. Vorrichtung zur Durchführung des Verfahrens nach Anspruch 1 oder einem der Ansprüche 2 bis 4, mit Mitteln zum Biegen von Stäben, durch welche das Bündel parallel laufender Leiterstränge(10) der Form vorgegebener Schablonen angepaßt wird, wobei eine Halterungsvorrichtung 101 bis 103 für den U-förmig gebogenen Stabbereich und wobei wenigstens ein Anschlagteil (110,120) als Begrenzung der Schablone für die Leiterstränge vorhanden ist, **dadurch gekennzeichnet,** daß für jeden Leiterstrang wenigstens ein unabhängig arbeitender Biegekopf (210, 220, 230, 240) mit beweglichem Biegefinger (215, 225) vorhanden ist, wobei der Biegekopf (210, 220, 230, 240) aus einem verdrehbar gelagerten Biegebacken (211, 221) mit darin geführten Leiterstäben besteht, gegen den der Biegefinger (215, 225) relativ bewegbar ist.

6. Vorrichtung nach Anspruch 5, **dadurch gekennzeichnet,** daß vier Biegeköpfe (210, 220, 230, 240) vorhanden sind, die um eine gemeinsame Achse (105) schwenkbar angeordnet sind, von denen zwei dem vorderen Bereich und zwei dem hinteren Bereich der Leiterstränge (10) zugeordnet sind, welche letztere in Querrichtung für das alternative Biegen von Schleifen- oder Wellenwicklungen austauschbar sind.

7. Vorrichtung nach Anspruch 6, **dadurch gekennzeichnet,** daß der Biegefinger (215, 225) linear in Achsrichtung verschiebbar ist.

8. Vorrichtung nach Anspruch 5, **dadurch gekennzeichnet,** daß der Biegefinger (215, 225) am vorderen Ende abgerundete Ansatzstücke als Biegeschuhe (216, 226) aufweist.

9. Vorrichtung nach Anspruch 5, **dadurch gekennzeichnet,** daß der Biegebacken (211, 221 einstellbare Aussparungen (213, 223) als Führung aufweist, die bei den Biegevorgängen ein Durchgleiten der Leiterstränge gewährleisten.

10. Vorrichtung nach Anspruch 9, **dadurch gekennzeichnet,** daß den Aussparungen (213, 223) für die Leiterstränge Schieber (218, 228) zugeordnet sind.

11. Vorrichtung nach Anspruch 5, **dadurch gekennzeichnet,** daß die Biegebacken (211, 221) an ihren den Anschlagteilen (110,120) zugewandten Seiten endständige Erhebungen (212,222) aufweisen.

12. Vorrichtung nach Anspruch 5, **dadurch gekennzeichnet,** daß neben der Halterungsvorrichtung (101 bis 103) für den U-förmig gebogenen Stabanfang weitere Spannmittel (310, 320) zum Festlegen der Leiterstränge am Übergang vom Blechpaket- zum Stirnseitenbereich der Schaltseite vorhanden sind.

13. Vorrichtung nach Anspruch 5, **gekennzeichnet durch** hydraulische, pneumatische oder elektrische Mittel zur Aktivierung der Biegeköpfe (210, 220, 230, 240)

14. Vorrichtung nach Anspruch 13, **dadurch gekennzeichnet,** daß die Mittel zur Aktivierung der Biegeköpfe (210, 220, 230, 240) programmsteuerbar sind.

**Claims**

1. Method for bending a number of juxtaposed and/or superposed electrically insulated bar-shaped conductors in wave windings and/or loop windings for electrical machines, wherein the conductors are present as U-shaped bundle with parallel conductor phases which are bent in individual bending processes around at least two non-parallel spatial axes, characterized in that all juxtaposed and/or superposed conductors are bent at the same time completely in coil form with curvatures around at least two axes perpendicular to each other, the individual bending processes on the conductor phases around the various spatial axes taking place in the scope of a single manipulation of the bundle with the initially parallel conductor phases.

2. Method according to claim 1, characterized in that the individual bending processes take place on the conductor phases proceeding from the U-shaped region of the bundle and steadily continuing to their free ends.

3. Method according to claim 1, characterized in that the bending processes on the parallel-running conductor phases are carried out at varying height position.

4. Method according to one of claims 1 to 3, characterized in that the conductor bundle is secured at the U-shaped conductor region and the conductor phases follow with the bending processes in the longitudinal direction.

5. Device for carrying out the method according to claim 1 or one of claims 2 to 4, with means for bending bars by means of which the bundle of parallel-running conductor phases (10) is adapted to the shape of specified templates, wherein a holding device (101 to 103) for the bar region bent in a U-shaped manner is present and wherein at least one stop part (110, 120) is present as limitation of the template for the conductor phases, characterized in that for each conductor phase there is present at least one independently operating bending head (210, 220, 230, 240) with moveable bending finger (215, 225), wherein the bending head (210, 220, 230, 240) consists of a rotatably mounted bending jaw (211, 221) with conductor bars guided therein, against which the bending finger (215, 225) is relatively moveable.

6. Device according to claim 5, characterized in that there are present four bending heads (210, 220, 230, 240) which are arranged so that they can rotate around a common axis (105), two of which are associated with the front region and two with the rear region of the conductor phases (10), the latter being exchangeable in transverse direction for the alternative bending of loop or wave windings.

7. Device according to claim 6, characterized in that the bending finger (215, 225) is linearly displaceable in the axial direction.

8. Device according to claim 5, characterized in that the bending finger (215, 225) on the front end has rounded attachment pieces as bending shoes (216, 226).

9. Device according to claim 5, characterized in that the bending jaw (211, 221) has adjustable recesses (213, 223) as guide which guarantee a sliding-through of the conductor phases during the bending processes.

10. Device according to claim 9, characterized in that sliders (218, 228) are associated with the recesses (213, 223) for the conductor phases.

11. Device according to claim 5, characterized in that the bending jaws (211, 221) have terminal elevations (212, 222) on their sides facing the stop parts (110, 120).

12. Device according to claim 5, characterized in that in addition to the holding device (101 to 103) for the start of the bar bent in a U-shaped manner there are present further clamping means (310, 320) for securing the conductor phases at the transition from the laminated core region to the front side region of the switching side.

13. Device according to claim 5, characterized by hydraulic, pneumatic or electrical means for the activation of the bending heads (210, 220, 230, 240).

14. Device according to claim 13, characterized in that the means for the activation of the bending heads (210, 220, 230, 240) are program-controllable.

## Revendications

1. procédé pour plier une multiplicité de conducteurs en forme de barreaux juxtaposés et/ou superposés, et isolés électriquement les uns par rapport aux autres, dans des enroulements ondulés et/ou en boucle pour des machines électriques, les conducteurs se présentant sous la forme d'un faisceau en forme de U comportant des branches parallèles, qui sont repliées, lors d'opérations individuelle de pliage, autour d'au moins deux axes non parallèles dans l'espace, caractérisé par le fait qu'on replie simultanément et complètement sous la forme d'une bobine comportant des coudes, tous les conducteurs juxtaposés et/ou superposés, autour d'au moins deux axes perpendiculaires entre eux, les différentes opérations de pliage appliquées aux branches de conducteurs s'effectuant autour des différents axes dans l'espace, dans le cadre d'une manipulation unique du faisceau, dans lequel les branches de conducteurs sont tout d'abord parallèles.

2. procédé suivant la revendication 1, caractérisé par le fait que les différentes opérations de pliage sont appliquées d'une manière continue aux branches de conducteurs depuis la partie en forme de U du faisceau en direction des extrémités libres des branches de conducteurs.

3. Procédé suivant la revendication 1, caractérisé par le fait que les opérations de pliage sont appliquées aux écheveaux parallèles de conducteurs, à des positions en hauteur différentes.

4. Procédé suivant l'une des revendications 1 à 3, caractérisé par le fait qu'on maintient fermement le faisceau de conducteurs au niveau de la zone en forme de U des conducteurs et que, lors des opérations de pliage, les branches de conducteurs se prolongent dans la direction longitudinale.

5. Dispositif pour la mise en oeuvre du procédé suivant la revendication 1 ou l'une des revendications 2 à 4, comportant des moyens pour plier des barreaux, à l'aide desquels le faisceau de branches parallèles de conducteurs (10) est adapté à la forme de gabarits prédéterminés, et dans lequel un dispositif de maintien (101 à 103) est prévu pour la partie repliée en forme de U des barreaux et au moins un élément de butée (110,120) est prévu en tant que limitation du gabarit pour les branches de conducteurs, caractérisé par le fait que pour chaque branche de conducteurs, il est prévu une tête de pliage (210,220,230,240) travaillant de façon indépendante et comportant un doigt mobile de pliage (215,225), la tête de pliage (2I0,220,230,240) étant constituée par une mâchoire de pliage (211,221) montée de manière à pouvoir pivoter et dans laquelle sont guidés des barreaux de conducteurs et par rapport à laquelle le doigt de pliage (215,225) peut être déplacé.

6. Dispositif suivant la revendication 5, caractérisé par le fait qu'il est prévu quatre têtes de pliage (210,220,230,240), qui sont disposées de manière à pouvoir pivoter autour d'un axe commun (105) et dont deux sont associées à la partie avant et deux à la partie arrière des écheveaux de conducteurs (10), ces derniers pouvant être permutés dans la direction transversale pour le pliage alternatif d'enroulements en boucle ou d'enroulements ondulés.

7. Dispositif suivant la revendication 6, caractérisé par le fait que le doigt de pliage (215,225) est déplaçable linéairement dans la direction axiale.

8. Dispositif suivant la revendication 5, caractérisé par le fait que le doigt de pliage (215,225) comporte, sur son extrémité avant, des éléments saillants arrondis constituant des sabots de pliage (216,226).

9. Dispositif suivant la revendication 5, caractérisé par le fait que la mâchoire de pliage (211,221) comporte, en tant que guide, des évidements réglables (213,225) garantissant un glissement des branches de conducteurs, lors des opérations de pliage.

10. Dispositif suivant la revendication 9, caractérisé par le fait que des poussoirs (218,228) sont associés aux évidements (213,223) pour les branches de conducteurs.

11. Dispositif suivant la revendication 5, caractérisé par le fait que les mâchoires de pliage (211,221) comportent des bossages d'extrémité (212,222 , sur leurs côtés tournés vers les éléments de butée (110,120).

12. Dispositif suivant la revendication 5, caractérisé par le fait qu'en-dehors du dispositif de maintien (101 à 103) pour la partie initiale repliée en forme de U des barreaux, il est prévu d'autres moyens de serrage (310,320) servant à fixer les branches de conducteurs au niveau de la jonction entre le paquet de tôles et la zone frontale du côté de commutation.

13. Dispositif suivant la revendication 5, caractérisé par des moyens hydrauliques, pneumatiques ou électriques pour activer les têtes de pliage (210,220,230,240).

14. Dispositif suivant la revendication 13, caractérisé par le fait que les moyens servant à activer les têtes de pliage (210,220,230,240) peuvent être commandés par un programme.

FIG 2

FIG 1

FIG 3

FIG 4

FIG 5

FIG 6